# EUROPEAN PATENT APPLICATION

(11) **EP 2 026 167 A1**
(43) Date of publication of application: **18.02.2009**
(21) Application number: 07744511.2
(22) Date of filing: 31.05.2007
(51) Int. Cl.: G06F 3/023, H04M 1/23, H04M 1/247

(54) **INPUT DEVICE AND INPUT METHOD**

(30) Priority: 02.06.2006 JP 2006155277
(71) Applicant: Panasonic Corporation, Kadoma-shi Osaka 571-8501 (JP)
(72) Inventor: INOUE, Shigeyuki c/o Panasonic Corporation, 2-chome, Chuo-ku Osaka-shi, Osaka 540-6207 (JP); YAMAMOTO, Hiroshi c/o Panasonic Corporation, 2-chome, Chuo-ku Osaka-shi, Osaka 540-6207 (JP); TAKASAKI, Shinichi c/o Panasonic Corporation, 2-chome, Chuo-ku Osaka-shi, Osaka 540-6207 (JP)
(74) Representative: Pautex Schneider, Nicole Véronique
(86) International application number: PCT/JP2007/061123
(87) International publication number: WO 2007/142123

(57) **Abstract**

The present invention provides an input device which enables a user to input desired information by simple operations even though a user has pressed a wrong button, as well as to make an information inputting position stationary.

The input device in the present invention includes: a rotor; a section specifying unit specifying a section; a rotation amount detecting unit detecting a rotation amount from the specified section; a section corresponding information holding unit which holds correspondence relationship between each of the sections and a unit of information corresponding to each of the sections; an information group holding unit which holds, as a first information group, each of units of information associated with the corresponding section; an information specifying unit specifying a unit of information corresponding to the specified section based on the held correspondence relationship between the section and the unit of information; and an information selecting unit selecting, out of the held first information group, a predetermined unit of information according to the rotation amount with respect to the specified unit of information as a reference point.

## Description

### Technical Field

The present invention relates to input devices which input information, and particularly to an input device for in a portable personal computer, a cellular phone, a remote controller for an electronic device, and a portable audio-visual appliance.

### Background Art

More and more electronics devices are downsizing with a variety of functions, which increases needs for easy-to-operate user interfaces in order for a user to input a lot of information. In particular, widespread cellular phones usually include pre-installed e-mail functions transmitting and receiving character information, in addition to communication functions. The cellular phones are even equipped with music reproduction functions, TV broadcasting receiving functions, and WWW browsing functions. Even though a user interface, integrating these functions and having a high input efficiency, is desired, user interfaces with currently common cellular phones are still a push-button type in which push buttons are arranged in a grid. Meanwhile, a compact cellular phone having excellent usability, which is capable of entering numbers by operating one lever, has been proposed (e.g., Patent Reference 1).

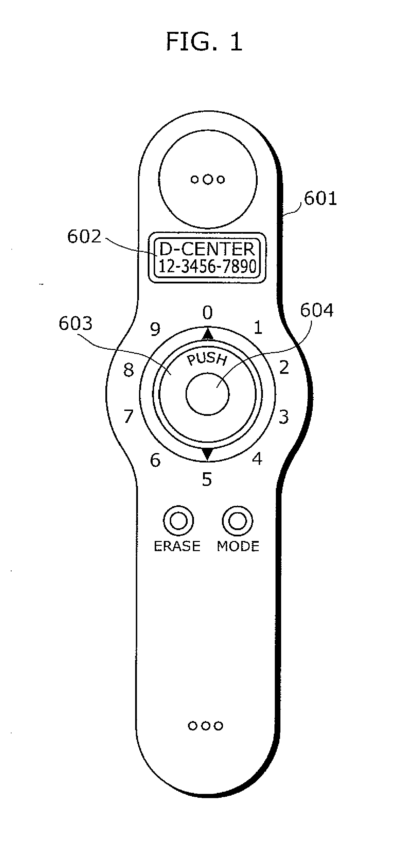

FIG. 1 shows an outline of a cellular phone disclosed in Patent Reference 1. As shown in FIG. 1, a substantially discoid and movable commander 603 is installed in the middle of an enclosure 601 in order to enter numbers. On the surface of the enclosure 601 and outer circumference around a commander 603, equally spaced numbers 0 through 9 are assigned. On the surface of the commander 603, a circular concave part is formed to catch the operator's finger. In the middle of the rear-surface of the commander 603, an end of a lever 604 is fixed vertical to the face of the commander 603. When the operator puts his or her finger in the concave part and move the commander 603 toward a desired direction, the lever 604 is also moved to the same direction, contacts provided at an end of the lever 604 abut corresponding terminals, and then, the numbers are inputted. Repeating the operations as many as the number of digits for a phone number, the entered numbers are sequentially displayed on a displaying unit 17. Upon confirming that the entered phone number is correct, the operator presses the commander 603 once in a direction of the enclosure 601, so that the lever 604 as well moves to the same direction to put out a transmission signal.

The cellular phone disclosed in Patent Reference 1, however, is not capable of character entry. In other words, even though the number of contacts provided at the end of the level 604 is sufficient for entering the numbers 0 through 9, the contacts are insufficient for entering English alphabet, Japanese hiragana, or Japanese katakana. A forced attempt to cope these contacts with the character entry: requires to increase in the number of contacts to be provided at the end of the lever 604; and is assumed to cause an increase of the casing in size and a significant decrease in operability. Thus, a cellular phone which enables an efficient character entry, using a jog dial, is proposed (e.g., Patent Reference 2).

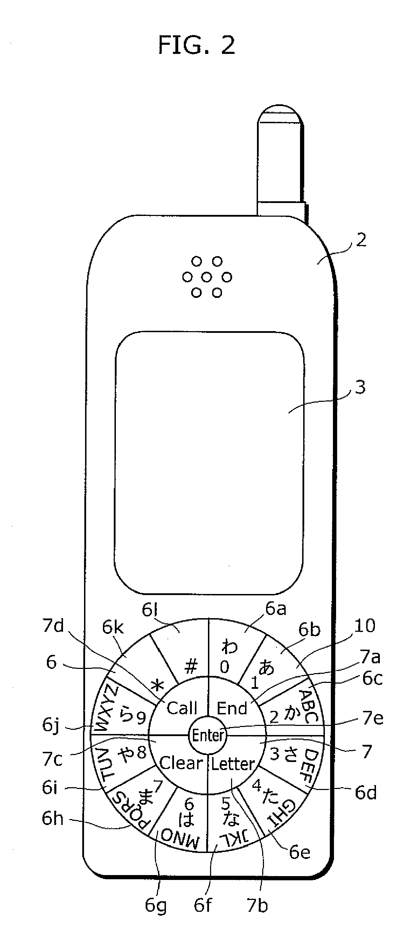

FIG. 2 shows a cellular phone disclosed in Patent Reference 2. In order to display various kinds of images, a display 3 is provided on the surface of a cellular phone body 2. An information input operating unit 10 is provided adjacent to the display 3. An annular button key unit 6 is provided outside the information input operating unit 10. Inside the button key unit 6, a jog dial unit 7 is provided. The button key unit 6 includes annularly disposed button keys 6a - 61 for entering numbers and characters. In the jog dial unit 7, a call-end push key 7a, a character push key 7b, a clear push key 7c, a sending and receiving push key 7d, and a determination push key 7e are disposed. The button key unit 6 and the jog dial unit 7 are integrally rotatable about the center of the jog dial unit 7. In the case where an operator desires to enter a hiragana character " 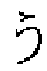 ", the operator presses the button key 6b corresponding to " 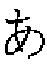 " row, and then rotates the button key unit 6, so that " 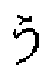 " in the " 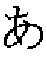 " row can be selected.
[Patent Reference 1] Japanese Unexamined Patent Application publication No. 08-154120
[Patent Reference 2] Japanese Unexamined Patent Application publication No. 2001-296953

### Disclosure of Invention

### Problems that Invention is to solve

In the information input operating unit 10 disclosed in Patent Reference 2, character-related information is assigned to each of the button keys 6a through 61, and function information is assigned to each of the push keys 7a to 7e. Thus, when a user rotates the button key unit 6 and the jog dial unit 7, positions of the character-related information and the function information, with respect to the cellular phone body 2, change. For example, the button key 6b, which the " 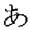 row is assigned, can be placed on a upper-right part or a lower-left part in the controlling unit when the user holds the cellular phone body 2. Thus, for each of operations, the user needs to look for information to be entered out of the push keys 6a through 61.

Further, the information input operating unit 10 disclosed in the Patent Reference 2 requires troublesome operations when the user presses a wrong button. Specifically, when one of the push keys 6a through 61 is pressed, a row character assigned to one of the push keys 6a through 61 is determined, and then, the operation forwards to selecting a column. Thus, in the case where another one of the button keys 6a through 61 is pressed by mistake, the user needs to press the clear push key 7c to resume the state before. Since push keys need to be smaller along with further miniaturization and multi-functionality among electronics devices, another push key adjacent to an intended push key can be possibly pressed more often by mistake.

The present invention is conceived in view of the above problems and has as an objective to provide an input device: which enables a user to input desired information by simple operations even though a user has pressed a wrong button, as well as to make an information inputting position stationary with respect to the device body.

### Means to Solve the Problems

In order to solve the above problems, an input device in the present invention includes: a device body; a rotor provided on the device body; a section specifying unit specifying a section out of sections into which an annular area on the device body is divided in a rotation direction, the annular area being provided along the rotor; a rotation amount detecting unit detecting a rotation amount of the rotor from the section specified by the section specifying unit; a section corresponding information holding unit which holds correspondence relationship between each of the sections on the device body and a unit of information corresponding to each of the sections; an information group holding unit which holds, as a first information group, each of units of information associated with the corresponding section on the device body; an information specifying unit specifying a unit of information corresponding to the section specified by the section specifying unit based on the correspondence relationship between the section and the unit of information, the relationship being held in the section corresponding information holding unit; and an information selecting unit selecting a predetermined unit of information with respect to the unit of information as a reference point according to the rotation amount, the unit of information being specified by the information specifying unit, and the rotation amount being detected by the amount detecting unit. Since this allows the first information group to be rigidly assigned in each of the sections, which can make an information inputting position to the device body stationary. Further, by rotating the rotor, a user can re-select a different unit of information, by switching from a unit of information corresponding to a once specified section. Thus, the user can input a desired set of information by simple operations even though a wrong button is pressed.

Here, the input device may include: a rotation amount determining unit determining the rotation amount detected by the rotation amount detecting unit; and an information determining unit determining the predetermined unit of information selected by the information selecting unit, based on the rotation amount determined by the rotation amount determining unit. This can determine a predetermined unit of information selected by the information selecting unit based on a rotation amount of the rotor.

Further, the input device may include a pressing detecting unit detecting that the rotor is pressed, wherein the section specifying unit may specify the section through the detection of the pressing of the rotor by the pressing detecting unit, and the rotation amount determining unit may determine the rotation amount by the pressing detecting unit detecting that the pressed rotor has been released. This can determine a predetermined unit of information by a simple operation; namely, releasing the pressed rotor.

In addition, the input device may include a pressing detecting unit detecting that the rotor is pressed, wherein the section specifying unit may specify the section by the pressing detecting unit detecting that the rotor has been pressed, and the rotation amount determining unit may determine the rotation amount by the pressing detecting unit detecting that the rotor has been re-pressed. This can determine a predetermined unit of information by a simple operation; namely, re-pressing the rotor.

The input device may include a pressing detecting unit detecting that the rotor is pressed, wherein the section specifying unit may specify the section by the pressing detecting unit detecting that the rotor has been pressed, and the rotation amount determining unit may determine the rotation amount by the pressing detecting unit detecting that the rotor has been pressed until the rotor has been further held down. This can determine a predetermined set of information by a simple operation; namely, pressing the rotor further down.

Moreover, the information group holding unit may holds a second information group associated with the predetermined unit of information in the first information group, and the information selecting unit may select a predetermined unit of information out of the second information group associated with the predetermined unit of information when the information determining unit determines the predetermined unit of information in the first information group. This allows a user to enter hiragana characters by designating the first information group as row characters and the second information group as column characters.

In addition, the input device may include: a first pressing detecting unit detecting that the rotor is pressed; and a second pressing detecting unit detecting that the rotor is pressed to hold down further than the first pressing detecting unit detects, wherein the information selecting unit may select: the predetermined unit of information out of the first information group while the first pressing detecting unit alone detects that the rotor is pressed; and the predetermined unit information out of the second information group while the second pressing detecting unit detects that the rotor is pressed. Since the above structure can detect the pressing in two stages, the structure allows more complex operations compared with the operations of the structure which can detect just one pressing stage.

Moreover, the input device may include an image generating unit generating an image in which: the units of information included in the first information group are arranged in a circle; units of information included in the second information group are arranged in a line; and a unit of information selected by the information selecting unit is highlighted more than the other units of information. This facilitates selection operations of a unit of information since the unit of information selected by the information selecting unit is highlighted more than another unit of information when the user selects a desired unit of information out of the second information group.

In addition, the input device may include an image generating unit generating an image in which the unit of information included in the first information group is arranged in a circle, a unit of information included in the second information group is arranged in a circle, and a set of information selected by the information selecting unit is displayed more prominently than the other units of information. This facilitates selection operations of a unit of information since the unit of information selected by the information selecting unit is highlighted more than another unit of information when the user selects a desired unit of information out of the second information group.

Moreover, the second information group may include either character information having a row of hiragana characters or sound volume information indicating sound volume. This enables the user to enter column characters of hiragana characters.

The input device may further include a pressing detecting unit detecting that the rotor is pressed, wherein the section specifying unit may specify, based on a signal from the pressing detecting unit, the section pressed via the rotor out of the annular area. This allows the user to specify a section by a simple operation; namely, pressing the rotor.

The pressing detecting unit may further include: first terminals each of which is assigned to the associated section; and first contacts each of which abuts any of the first terminals, so that the first terminal is selected. This can detect pressing with a simple structure; namely, detecting conductivity of a terminal.

In addition, the first terminals may be provided underneath the rotor. This makes it possible to achieve in a simple manner a structure in which the first terminal and the first contact abuts.

Moreover, as many the first contacts as the first terminals may be provided. This can ensure the first contact to abut the first terminal even though rotation of the rotor causes the location of the first contact to be changed.

Further, each of the units of information included in the first information group may be either marked or stamped around the rotor in association with a position on which corresponding the first terminal is provided. This enables the user to efficiently arrive at a desired unit of information by operating the rotor with reference to a location, as a mark, on which the desired information is marked or stamped.

The input device may further include an image generating unit generating an image in which: the unit of information included in the first information group is arranged in a circle; and the unit of information selected by the information selecting unit is highlighted more than the other units of information. This facilitates selection operations of a unit of information since the unit of information selected by the information selecting unit is highlighted more than another unit of information when the user selects a desired unit of information out of the first information group.

In addition, the first information group may include either character information having a column of hiragana characters or band information indicating a frequency band. This enables the user to enter row characters of hiragana characters.

In addition to implementing as an input device described above, the present invention can also be achieved as an input method for utilizing characteristic units included in the input device as steps, and a program to cause a computer to execute such steps. As a matter of course, such a program can be distributed via recording media such as a CD-ROM, and transmission media such as the Internet.

### Effects of the Invention

As clarified out of the above description, an input device in the present invention can make an information inputting position stationary with respect to the device body since a first information group is rigidly assigned in each sections. Further, by rotating a rotor, a user can re-select different information from information corresponding to once specified section. Thus, the user can input desired information by simple operations even though the user presses a wrong button. Along with escalating miniaturization and multi-functionality among electronics devices, more and more users are likely to press wrong buttons on the electronics devices. Thus, the present invention is said to enjoy a significant practical value accordingly.

### Brief Description of Drawings

FIG. 1 shows an outline of a cellular phone disclosed in the Patent Reference 1.
FIG. 2 shows a cellular phone disclosed in the Patent Reference 2.
FIG. 3 is an elevation view of a cellular phone applying an input device in a first embodiment.
FIGS. 4 (A) and (B) show internal structures of the input device in the first embodiment.
FIGS. 5 (A) and (B) show arrangement examples of protruding portions in the first embodiment.
FIG. 6 illustrates a first terminal in the first embodiment.
FIG. 7 is a block diagram showing a functional structure of the input device in the first embodiment.
FIGS. 8 (A) and (B) are diagrams conceptually illustrating information held in the input device in the first embodiment.
FIG. 9 is a flowchart showing processing operations of the input device in the first embodiment.
FIG. 10 (A), (B), (C), and (D) is a schematic view illustrating: operations of the rotor in the first embodiment; and signal state transition process in the operations.
FIGS. 11 (A), (B), and (C) exemplify operations of the rotor in the first embodiment.
FIGS. 12 (A), (B), and (C) exemplify screens displayed on a liquid crystal displaying unit in the first embodiment.
FIGS. 13 (A) and (B) show other operation examples of the rotor in the first embodiment.
FIGS. 14 (A), (B), and (C) show screen examples displayed on the liquid crystal displaying unit in the first embodiment.
FIG. 15 is a diagram conceptually illustrating a second information group in a second embodiment.
FIGS. 16 (A) and (B) show screen examples displayed on a liquid crystal displaying unit in the second embodiment.
FIG. 17 is an elevation view of a cellular phone applying an input device in a third embodiment.
FIGS. 18 (A) and (B) show internal structures of the input device in the third embodiment.
FIGS. 19 (A) and (B) show arrangement examples of protruding portions in the third embodiment.
FIGS. 20 (A), (B), and (C) are cross-sectional views taken from the line A - A' of FIG. 18 (A).
FIGS. 21 (A), (B), and (C) exemplify operations of a rotor in the third embodiment.
FIGS. 22 (A) and (B) show other operation examples of the rotor in the third embodiment.
FIG. 23 is a diagram conceptually exemplifying another information group held in an information group holding unit.
FIG. 24 exemplified another screen example displayed on the liquid crystal displaying unit.
FIGS. 25 (A), (B), (C), (D), (E), and (F) show a transition of screens displayed on the liquid crystal displaying unit.

### Numerical References

- 203: Input device
- 206: First pressing part
- 207: Second pressing part
- 208: Third pressing part
- 210: First terminal
- 211: Second terminal
- 214: Rotor
- 218: First protruding portion
- 219: Second protruding portion
- 220: Third terminal
- 221: Third protruding portion
- 423: Section corresponding information holding unit
- 424: Information group holding unit
- 425: Information selecting unit
- 426: Information determining unit
- 427: Rotation amount determining unit
- 428: Rotation amount detecting unit
- 430: Information specifying unit
- 431: Image generating unit
- 420: Section specifying unit
- 440: Pressing detecting unit

### Best Mode for Carrying Out the Invention

Hereinafter, embodiments of the present invention shall be described in detail with reference to the drawings.

### (First Embodiment)

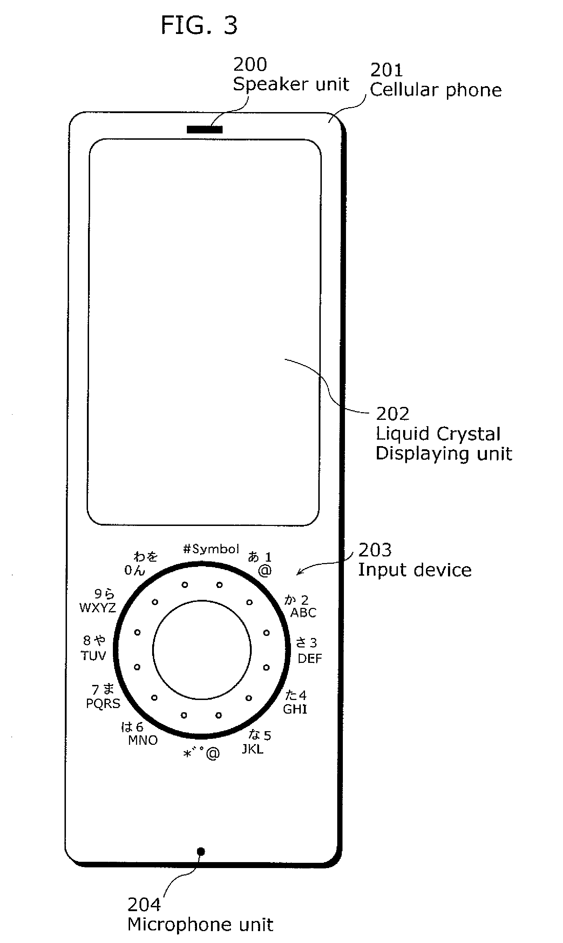

FIG. 3 is an elevation view of a cellular phone 201 applying an input device 203 in a first embodiment. As shown in FIG. 3, the cellular phone 201 includes a liquid crystal displaying unit 202 displaying various sets of information, a speaker unit 200 for a call, a microphone unit 204, and the input device 203 in the present invention. The input device 203 is located near the liquid crystal displaying unit 202 of the cellular phone, and is used for selecting and executing functions of the cellular phone 201 and entering symbols and characters.

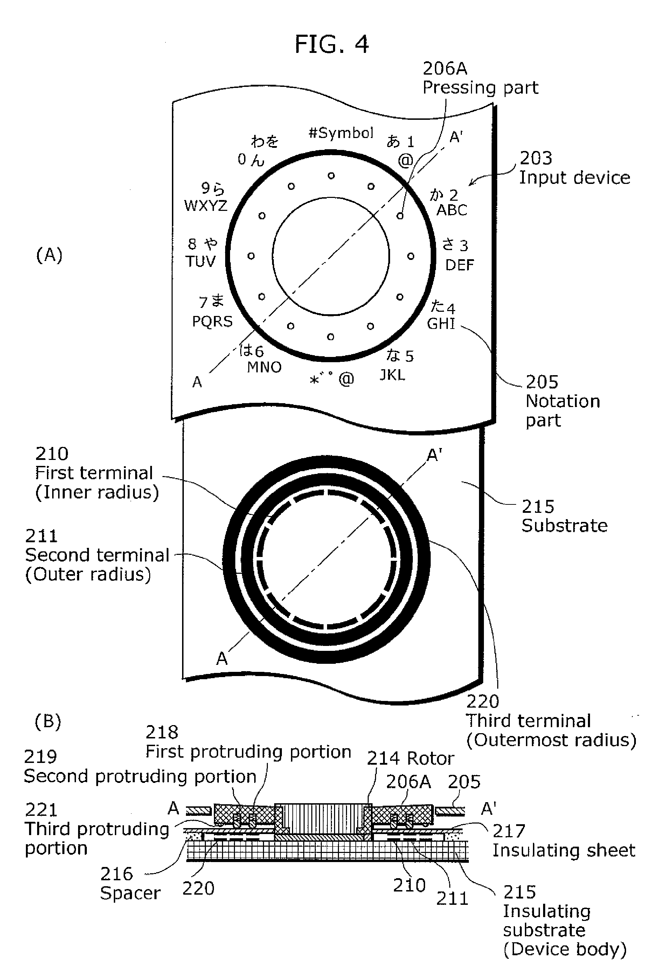

FIGS. 4 are drawings showing internal structures of the input device 203. FIG. 4 (A) is an elevation view of an indicating part 205 on a casing surface, and an elevation view of a substrate 215 in the indicating part 205. FIG. 4 (B) is a cross-sectional view taken from line A - A' of FIG. 4 (A). As shown in the drawings, the input device 203 includes: the indicating part 205; a pressing part 206A; a first terminal 210; a second terminal 211; a third terminal 220; a rotor 214; the substrate 215; a spacer 216; an insulating sheet 217; a first protruding portion (a first contact) 218; a second protruding portion 219; and a third protruding portion 221.

Each of first terminals 210, the second terminal 211, and the third terminal 220 may collectively be referred to as "terminals", hereinafter. Further, the first protruding portion 218, the second protruding portion 219, and the third protruding portion 221 may collectively be referred to as "protruding portions", hereinafter.

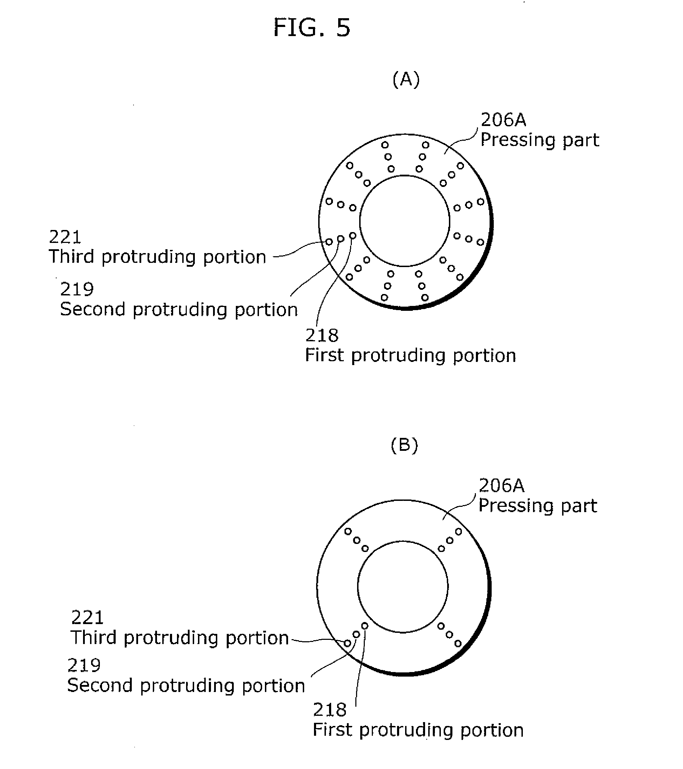

Each of the first terminals 210, the second terminal 211, and the third terminal 220 are: concentrically arranged on the substrate 215 as shown in FIG. 4 (A); and structured out of a pair of conductive members having predetermined clearance as shown in FIG. 4 (B). As shown in FIG. 4 (B), the first protruding portion 218, the second protruding portion 219, and the third protruding portion 221 are disposed in the pressing part 206A. Since the pressing part 206A is supported by the rotor 214, the pressing part 206A, the protruding portions, and the rotor 214 integrally rotate. The first terminals 210, the second terminal 211, and the third terminal 220 are respectively located below the first protruding portion 218, the second protruding portion 219, and the third protruding portion 221. Thus, presence or absence of conductivity is caused based on a position of the pressing part 206A. Each of the first protruding portion 218, the second protruding portion 219, and the third protruding portion 221 may be provided, in number, either: as many as the first terminals 210 (12 pieces), shown in FIG. 5 (A); or a third as many as the first terminals 210 (four pieces) shown in FIG. 5 (B). It is noted that the substrate 215 is integral with the body of the cellular phone 201.

On the casing of the cellular phone 201is the indicating part 205, indicating characters, alphabet, numbers, and symbols. Marking or stamping may be utilized as indication schemes, and the schemes may not necessarily be limited to these. Here, an annular area, on the device body, along with the rotor 214 is divided into 12 areas in a rotation direction. The divided areas are referred to as "sections". Each of the sections is indicated with characters indicating a unit of information corresponding to an associated section, such as " 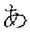 1", " 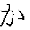 2ABC", and " 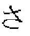 3DEF".

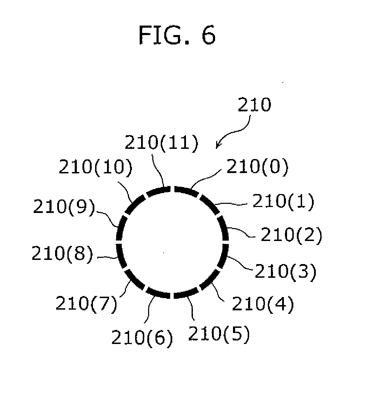

The first terminals 210 are conductive members fixed on the substrate 215, and are arranged in the areas into which the annular area, on the substrate 215, is divided into 12, as shown in FIG. 4 (A). Here, the annular area is located along with the rotor 214. In other words, each of 12 first terminals 210 corresponds to an associated section on one-to-one basis. As shown in FIG. 6, an individually independent identification symbol (terminal numbers from 0 to 11, for example) is assigned to each first terminal 210. When one of the first terminals 210 (0) to (11) abuts to the first protruding portion 218, the terminal number of a conductive first terminal 210 is put out, along with a pressing signal.

The rotor 214 is a cylindrical member rotating upon a shaft erected from the substrate 215. When the pressing part 206A attached to the rotor 214 is pressed, the pressing part 206A is intended to incline toward substrate 215. In both of states with the pressing part 206A pressed and with the pressing part 206A released, the rotor 214 can be rotated.

The pressing part 206A also functions to point to a desired position on the indicating part 205, as well as to be used as a knob when the user rotates the rotor 214. For example, when the user presses the pressing part 206A near the indicating part 205 indicating " 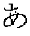 "; namely a unit of information, the first terminal 210 corresponding to the pressed position becomes conductive.

It is noted that in the structure having only four sets of protruding portions as shown in FIG. 5 (B), the protruding portion may not always be located below the pressing part 206A on which the user presses. Hence, even though the user presses the pressing part 206A near the indicating part 205 indicating " 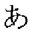 ", for example, the first terminal 210 (0) corresponding to the pressed position may not become conductive. Instead, the first terminal 210 (1) adjacent to the first terminal 210 (0) possibly becomes conductive. Thus, a circle indicating a position of the protruding portion may be added on the pressing part 206A, so that the user can recognize the position of the protruding portion. This enables the user to: rotate the rotor 214 so that the circle added on the pressing part 206A is positioned to correspond to a desired unit of information; and then to press the pressing part 206A.

first terminal 210 corresponding to the desired unit of information despite pressing the pressing part 206A, the user may select the desired unit of information by rotating the rotor 214.

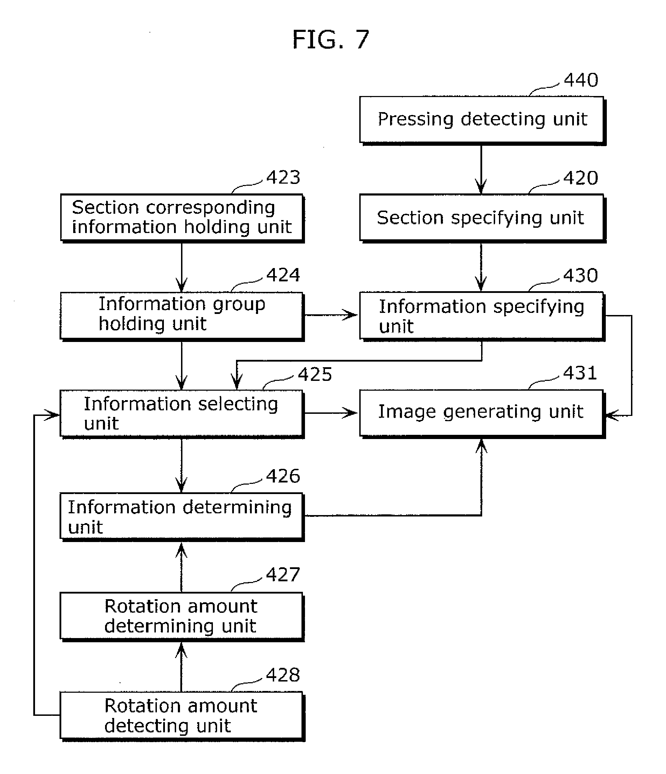

FIG. 7 is a block diagram showing a functional structure of the input device 203 in the first embodiment. The input device 203 includes: a section specifying unit 420; a rotation amount detecting unit 428; a rotation amount determining unit 427; a section corresponding information holding unit 423; an information group holding unit 424; an information selecting unit 425; an information determining unit 426; an information specifying unit 430; an image generating unit 431; and a pressing detecting unit 440.

The section specifying unit 420, exemplifying a section specifying unit in the present invention, is a processing unit to specify a section out of sections into which an annular area on the device body is divided in a rotation direction, the annular area being provided along with the rotor 214. Specifically, obtaining a terminal number of a first-conductive first terminal 210 with a press of the pressing part 206A, the section specifying unit 420 specifies the conductive first terminal 210 out of the 12 first terminals.

The rotation amount detecting unit 428, exemplifying a rotation amount detecting unit in the present invention, is a processing unit to detect rotation amount of which the rotor 214 rotates out of the section specified by the section specifying unit 420. Specifically, immediately after the section specifying unit 420 specifies any of the terminals 210, the rotation amount detecting unit 428 counts a pulse signal which is put out, in accordance with the rotation of the rotor 214, from the specified first terminals 210 and always forwards the counted value as rotation amount information. Moreover, the rotation amount detecting unit 428: judges whether the rotor 214 rotates clockwise (forward direction) or counter-clockwise (backward direction) based on the terminal number of the conductive first terminal 210; and forwards a judgment result; namely rotation direction information.

The section corresponding information holding unit 423, exemplifying a section corresponding information holding unit in the present invention, is a processing unit to hold correspondence relationship between each of sections of the device body and a unit of information corresponding to the section. A specific example of a held unit of information shall be described hereinafter.

The information group holding unit 424, exemplifying an information group holding unit in the present invention, is a processing unit to hold each of the units of information corresponding to the associated section on the device body as an information group. A specific example of the held information group shall be described hereinafter.

The information specifying unit 430, exemplifying an information specifying unit in the present invention, is a processing unit to specify a unit of information corresponding to the section specified by the section specifying unit 420, based on the correspondence relationship held by the section corresponding information holding unit 423, the corresponding relationship being between the section and the unit of information. Specifically, the information specifying unit 430: extracts an information group corresponding to the specified section (in other words the specified first terminal 210) specified by the section specifying unit 420; and forwards the extracted information group to the information selecting unit 425 and the image generating unit 431.

The information selecting unit 425, exemplifying an information selecting unit in the present invention, is a processing unit to select, with respect to the unit of information specified by the information specifying unit 430 as a reference point, a predetermined unit of information out of a first information group held by the information group holding unit 424, based on the rotation amount detected by the rotation amount determining unit 427. Specifically, the information selecting unit 425: refers to the information group held by the information holding unit 424; selects, out of the referred information group, the predetermined unit of information based on the rotation amount detected by the rotation amount detecting unit 428; and forwards the predetermined set of information to the information determining unit 426 and the image generating unit 431.

The rotation amount determining unit 427, exemplifying a rotation amount determining unit in the present invention, is a processing unit to determine the rotation amount detected by the rotation amount detecting unit 428. Specifically, the rotation amount 427: detects whether or not the third terminal 220 is conductive, and off of the second terminal 211; determines the rotation amount detected by the rotation amount detecting unit 428 at the moment of the detection; and forwards the determined rotation amount to the information determining unit426.

The information determining unit 426, exemplifying an information determining unit in the present invention, is a processing unit to: determine the predetermined unit of information selected by the information selecting unit 425 based on the rotation amount determined by the rotation amount determining unit 427; and then forwards the determined predetermined information to the image generating unit 431.

The image generating unit 431, exemplifying an image generating unit in the present invention, is a processing unit to generate various images to be displayed on the liquid crystal displaying unit 202. The various images are generated out of: the unit of information specified by the information specifying unit 430; the predetermined unit of information selected by the information selecting unit 425; and the unit of information determined by the information determining unit 426. Specific details of the various images shall be described hereinafter.

The pressing detecting unit 440, exemplifying a pressing sensing unit in the present invention, is a processing unit to detect the fact that the rotor 214 is pressed. Since a pressing part is pressed down in two stages, the pressing detecting unit 440 separately detects each of the two holding-down stages. In other words, the pressing detecting unit 440 detects a conduction start of the first terminal 210 and the second terminal 211 when user touches the pressing part with his or her finger. Further, when the user presses the pressing part until the pressing part tilts (depresses the pressing part), the pressing detecting unit 440 detects the conduction start of the third terminal 220. In addition, when the user relaxes his or her finger pressing the pressing part to return to the state in which the finger has touched the pressing part, the pressing detecting unit 440 detects the conduction reset of the third terminal 220. Moreover, when the user releases his or her finger touching the pressing part, the pressing detecting unit 440 detects a conduction reset of the first terminal 210 and the second terminal 211.

It is noted that a toggle switch can be adopted as a pressing detecting structure for the third protruding portion 221 and the third terminal 220. In this case, when the user further presses down a tilted pressing part, the pressing detecting unit 440 detects the conduction reset of the third terminal 220. In addition, when the user releases his or her finger touching the pressing part, the pressing detecting unit 440 detects the conduction reset of the first terminal 210 and the second terminal 211.

As described above, the functions of the pressing detecting unit 440 can be classified roughly into: a function to detect the conductivity of the first terminal 210 and the second terminal 211; and a function to detect the conductivity of the third terminal 220. Thus, in the following descriptions, the pressing detecting unit 440, which detects the conductivity of the first terminal 210 and the second terminal 211, is also referred to as "the first pressing detecting unit", and the pressing detecting unit 440, which detects the conductivity of the third terminal 220, is also referred to as "the second pressing detecting unit". It is noted that an expression "a function to detect conductivity" includes a function to detect the fact that the pressed state of the rotor 214 ends and a function to detect the fact that the rotor 214 is pressed to be tilted, as well as to detect the fact that the rotor 214 is pressed. Further, the fact that the rotor 214 is tilted can be expressed that "the rotor 214 is further held down".

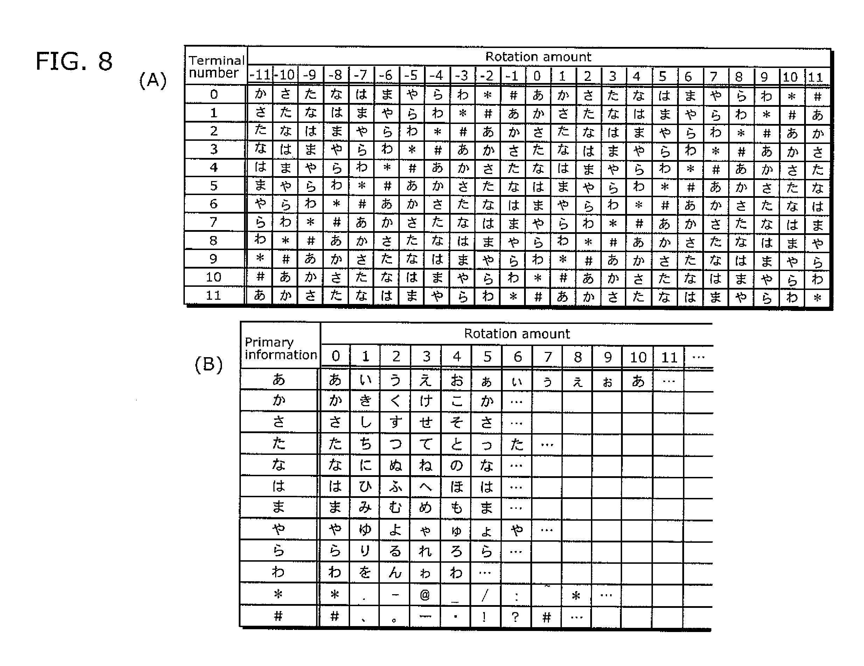

Specifically, the information held in the input device 203 is information stored in the section corresponding information holding unit 423 and in the information group holding unit 424. In FIG. 8, information shown in each cell is a unit of information, and a group of the unit of information arranged in a direction of the rotation amount (row) represents a single unit information group. As shown in FIG. 8 (A), a group of unit information corresponding to each of the terminal numbers (sections) shall be referred to as a "first information group". In the case where a predetermined unit of information is selected to be determined out of the first information group, the unit information is referred to as "primary information". As shown in FIG. 8 (B), a unit information group corresponding to the primary information is referred to as a "second information group". Row characters 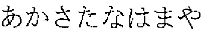 " 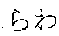 " are included in the first information group. Column characters " 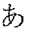 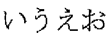 " and " 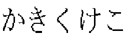 " are included in the second information group. In accordance with a determination situation of the information determining unit 426 (the conductivity of the third terminal 220), the information selecting unit 425 switches selection between the first information group and the second information group. Specifically, when the third terminal 220 becomes conductive with the predetermined unit of information selected out of the first information group, the information selecting unit 425 switches the selection from the first information group to the second information group. When the third terminal 220 becomes conductive or non-conductive with a predetermined unit of information selected out of the second information group, the information selecting unit 425 switches the selection from the second information group to the first information group.

It is noted that a "terminal number" in FIG. 8 is a symbol to identify a first terminal 210 to be conductive with a press by the rotor 214, and a "rotation amount" in FIG. 8 corresponds to a counted number based on the terminal number of the conductive first terminal 210. Further, hiragana characters and symbols are described in FIG. 8 as a matter of convenience. An actual section corresponding information holding unit 423 holds codes corresponding to the hiragana characters and the symbols. Further, by switching among a Japanese language input mode, a number mode, and an English language mode, information groups which the information selecting unit 425 uses can be switched.

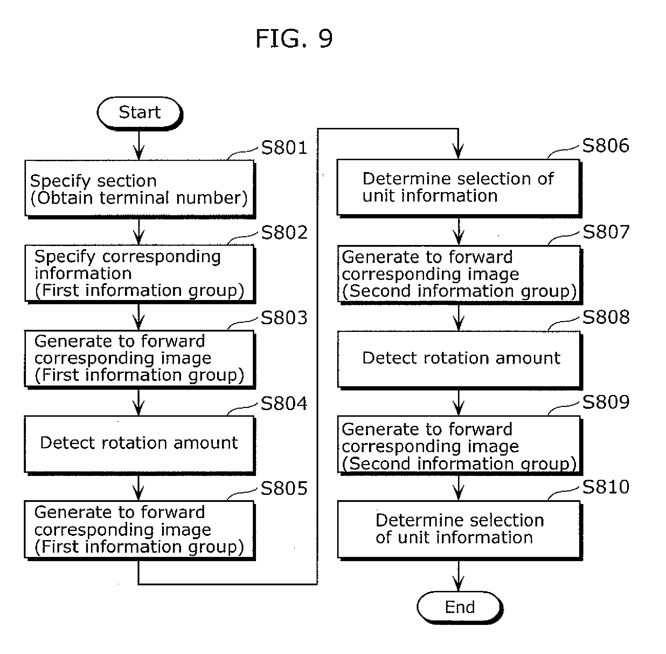

FIG. 9 is a flowchart showing processing operations of the input device 203. Hereinafter, processing operations for inputting a hiragana character " 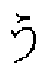 " shall be described, using FIG. 9.

First, the section specifying unit 420 specifies a section (S801). Assumed here is that the user intends to press a pressing part 206A near an indicating part 205 indicating " 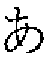 " in order to enter the hiragana character " 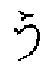 ". However, the user presses, by mistake, a pressing part 206A near an indicating part 205 indicating " 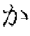 ". This causes a first terminal 210 (1) near the indicating part 205 indicating " 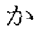 " to become conductive. Thus, the section specifying unit 420 obtains a terminal number "1" of the first terminal 210 (1).

Specifically, the information specifying unit 430: extracts a unit of information corresponding to the terminal number "1" out of the first information group "...# 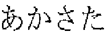 ..." held in the information group holding unit 424; and then provides the extracted unit of information to the information selecting unit 425 and the image generating unit 431.

Next, the image generating unit 431 generates to forward a corresponding image (S803). For example, when the rotation amount detected by the rotation amount detection unit 428 becomes "-1", the information selecting unit 425 selects a predetermined unit of information "Specifically, the image generating unit 431 generates an image, using the unit information specified by the information specifying unit 430, and then forwards the generated image to the liquid crystal displaying unit 202.

Since " 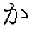 " row is currently selected, the user rotates the rotor 214 30 degrees counter-clockwise in order to select " 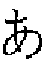 " row. For example, when the rotation amount detected by the rotation amount detecting unit 428 becomes "-1", in response to the rotation amount "-1", the information selecting unit 425 selects the predetermined unit information " 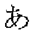 ". The image generating unit 431, as well, generates an image corresponding to the unit information " 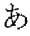 ", and then forwards the generated image to the liquid crystal displaying unit 202.

Then, the information determining unit 426 determines the selected predetermined unit information selected by the information selecting unit 425. For example, when the user presses the pressing part 206A further down at the position where the rotor 214 is rotated 30 degrees counter-clockwise, the fact that the third terminal 220 becomes conductive is detected. Hence, in response to the rotation amount "-1" which the rotation amount detecting unit 428 detects, the information determining unit 426 determines the selected predetermined unit information " 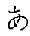 " selected by the information selecting unit 425, and then forwards the predetermined information to the image generating unit 431.

The above processing determines " 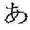 " row.

Next, the information selecting unit 425 starts selecting predetermined unit information out of the second information group associated with the predetermined unit information determined by the information determining unit 426. Specifically, the unit information selecting unit 425 extracts the second information group " 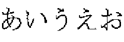 " associated with the unit information " 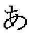 " from the information group holding unit 424, and forwards the extracted second information group " 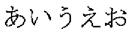 ..." to the image generating unit 431.

Then, the image generating unit 431 generates to forward a corresponding image (S807). Specifically, the image generating unit 431 generates an image, using the second information group " 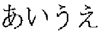 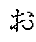 ...", and then forwards the generated image to the liquid crystal displaying unit 202.

Next, the rotation amount detecting unit 428 detects the rotation amount (S808). Since " 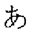 " is selected when the rotation amount is 0, the user keeps the pressing part 206A further pressing down and turns the rotor 214 60 degrees clockwise, so that " 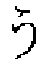 " is selected. This causes the first terminal 210 (2) to be conductive. Since the terminal number has increased by two from "0" to "2", the rotation amount detecting unit 428 detects the fact that the rotation amount is "2".

Then, the image generating unit 431 generates to forward a corresponding image (S809). For example, when the rotation amount detected by the rotation amount detecting unit 428 becomes "2", in response to the rotation amount "2", the information selecting unit 425 selects the predetermined unit information " 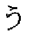 ". The image generating unit 431, as well, generates an image corresponding to the unit information " 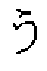 ", and then forwards the generated image to the liquid crystal displaying unit 202.

Next, the information determining unit 426 determines the selected predetermined unit information, in the second information group, selected by the information selecting unit 425 (S810). For example, when the user leaves his or her finger from the pressing part 206A, the fact that the third terminal 220 becomes non-conductive is detected. Hence, in response to the rotation amount "2" which the rotation amount detecting unit 428 detects, the information determining unit 426 determines the selected predetermined unit information " 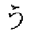 " selected by the information selecting unit 425, and then forwards the predetermined unit information to the image generating unit 431.

The above processing determines " 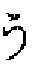 ".

It is noted in the above-described embodiment that, for determining the selected predetermined unit information out of the second information group, the information determining unit 426 is structured to determine the selection of the predetermined unit information selected by the information selecting unit 425 in the event of changing from a stage in which the user further presses down the pressing down part 206A (the contact to the third terminal is maintained) to a stage in which the user releases the pressed down pressing down part 206A. On the other hand, for determining the selection of the predetermined unit information in the first information group, the information determining unit 426 may also be structured in that when the third terminal becomes conductive with the pressing part 206A further pressed down again in the case where the user: further presses down the pressing part 206A and then, with the pressing on the pressing part 206A kept relaxed, that is, the third terminal becomes non-conductive with the first terminal kept conductive; and rotates the rotor 214, so that the desired unit information is selected out of the second information group, the information determining unit 426 intends to determine the selected predetermined unit information selected by the information selecting unit 425.

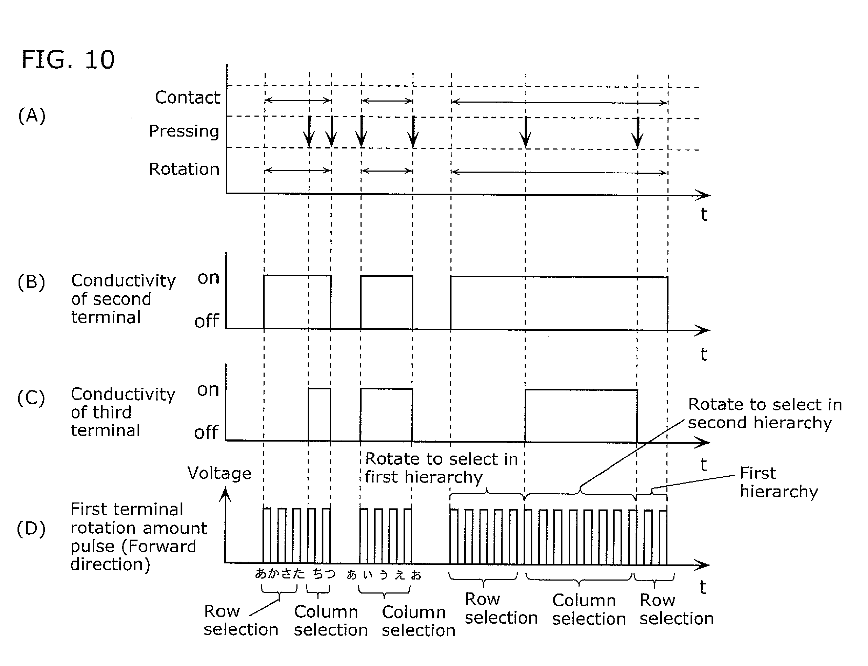

FIG. 10 is a schematic view illustrating operations of the rotor 214 and signal state transitions in the operations.

FIG. 10 (A) shows details of the operations of the rotor 214. Here, a term "pressing" intends to include two meanings; namely, "contact start" and "pressing start". The "contact start" is to touch the pressing part with a finger, and the "pressing start" is to tilt the pressing part with the finger. A term "pressing release" intends to include two meanings; namely, "pressing release", and "contact release". The "pressing release" is to apply power to the finger tilting the pressing part, so that the pressing part returns to a contact state, and the "contact release" is to release the finger touching the pressing part. Sideways arrows indicate operations to rotate the rotor 214.

FIG. 10 (B) illustrates conductivity of the second terminal 211. The second terminal 211 becomes on at "contact start" timing, and off at "contact release" timing.

FIG. 10 (C) illustrates conductivity of the third terminal 220. The third terminal 220 becomes on at "pressing start" timing, and off at "pressing release" timing.

FIG. 10 (D) illustrates a pulse signal emitted from the first terminal 210. From the contact start to the contact release, the pulse signal is emitted in accordance with the rotation of the rotor 214. In the case where the second terminal 211 is on to be conductive and the third terminal 220 is off to be non-conductive, a forward direction rotation of the rotor 214 selects row characters in the order of " 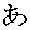 ", " 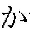 ", " 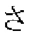 ", " 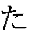 ", and " 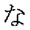 " as a unit of information included in the first information group. On the other hand, in the case where the second terminal 211 is conductive and the third terminal 220 is non-conductive, a forward direction rotation of the rotor 214 selects column characters in the order of " 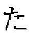 ", " 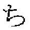 ", and " 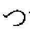 " as a unit of information included in the second information group. The row characters to be selected as above are determined by "pressing start", and the column characters determined at "contact release" timing. When the user performs "pressing release" with the column characters selected, the user can forward to the selection of the row characters without determining the column characters.

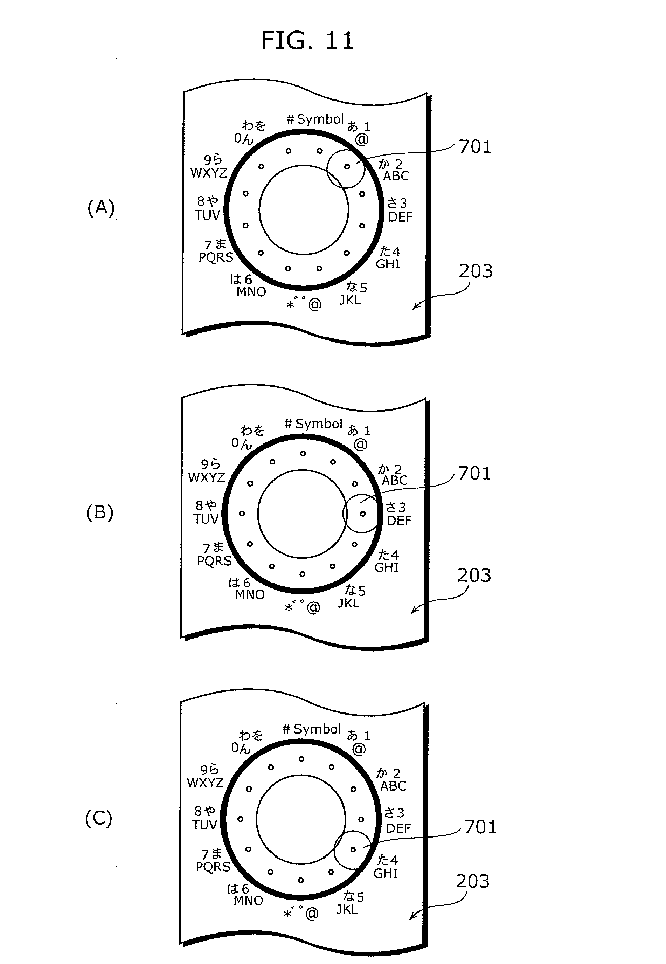

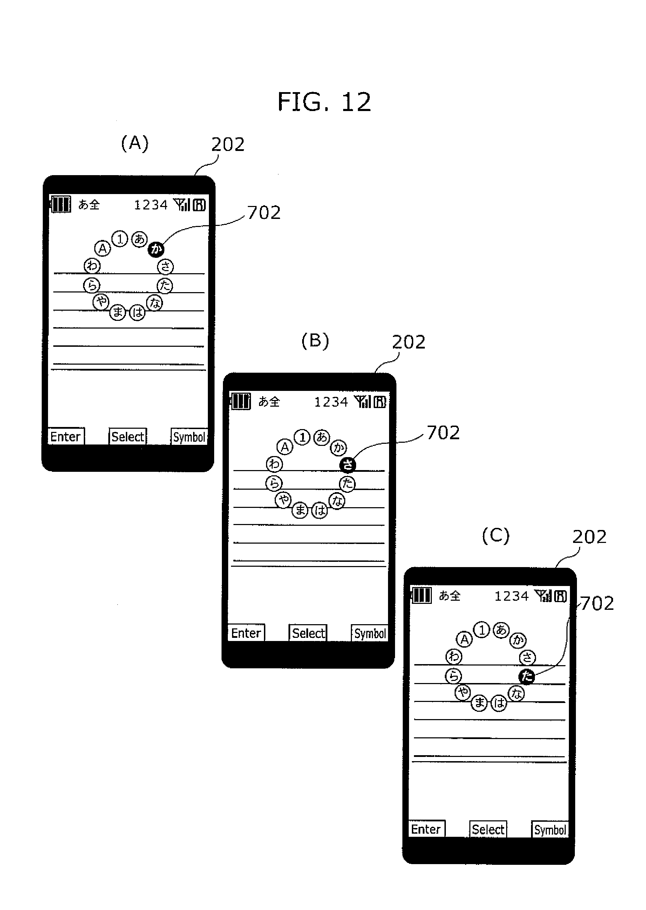

FIGS. 11 exemplify operations of the rotor 214. 701 in FIGS. 11 locates where on the rotor 214 the user's finger touches. FIGS. 12 exemplify screens displayed on the liquid crystal displaying unit 202 in the operations shown in FIGS. 11. Using FIGS. 11 and 12, operations for selecting row characters, in the order of " 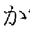 ", " 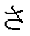 ", and " 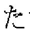 ", as a unit of information in the first information group shall be described in detail, hereinafter.

First, as shown in FIG. 11 (A), when the user touches with his or her finger any position on the pressing part 206A (may be referred to as "contact position 701" hereinafter), the pressing part 206A is held down, and the first terminal 210 and the second terminal 211 become conductive. Since a conductive first terminal 210 is the first terminal 210 (1), and the rotor 214 has not rotated yet, " 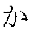 " is selected out of the first information group as a row character corresponding to a rotation amount "0" with the terminal number "1". As a result, the image generating unit 431 generates an image of", as shown in FIG. 12 (A), row characters in the first information group "...# " 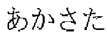 ..." are displayed on the liquid crystal displaying unit 202. At this moment, the image generating unit 431 highlights " 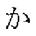 " row, selected by the information selecting unit 425, out of the row characters "... 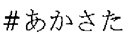 ...".

Next, as shown in FIG. 11 (B), when the user rotates the rotor 214 30 degrees clockwise, the rotation amount detecting unit 428 detects a rotation amount "1". Then, as shown in FIG. 12 (B), in response to the rotation amount "1", the information selecting unit 425 selects " 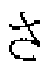 " row, and the image generating unit 431 highlights the " 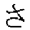 " row. As shown in FIG. 11 (C), when the user rotates the rotor 214 another 30 degrees clockwise, the rotation amount detecting unit 428 detects a rotation amount "2". Then, in response to the rotation amount "2", the information selecting unit 425 selects " 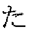 " row, and the image generating unit 431 highlights the " 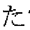 " row , as shown in FIG. 12 (C).

As described above, the image generating unit 431 intends to generate an image with the unit of information, included in the first information group, arranged in circle. This enables, to be matched, the character arrangement displayed on the liquid crystal displaying unit 202 and the character arrangement indicated on the indicating part 205. In addition, the image generating unit 431 can generate an image that a unit of information selected by the information selecting unit 425 is highlighted more than another unit of information. This enables the user to easily see a selected unit of information out of units of information included in the first information group.

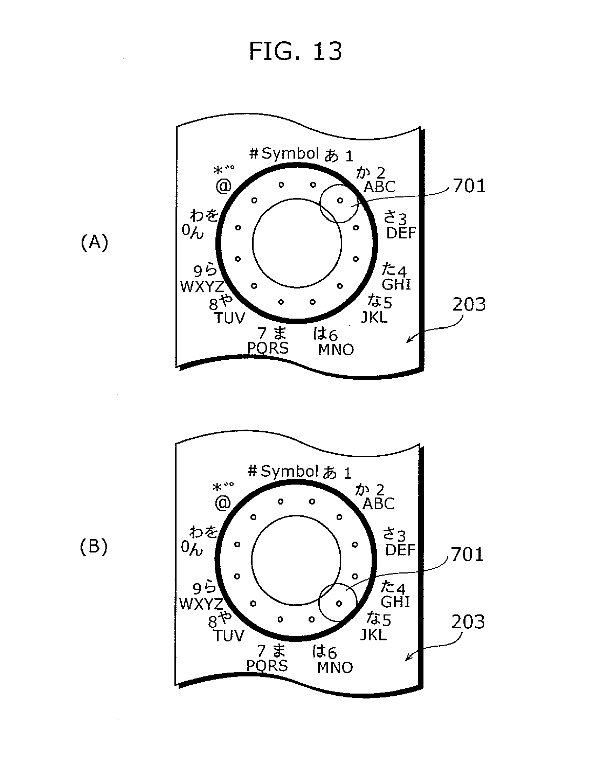

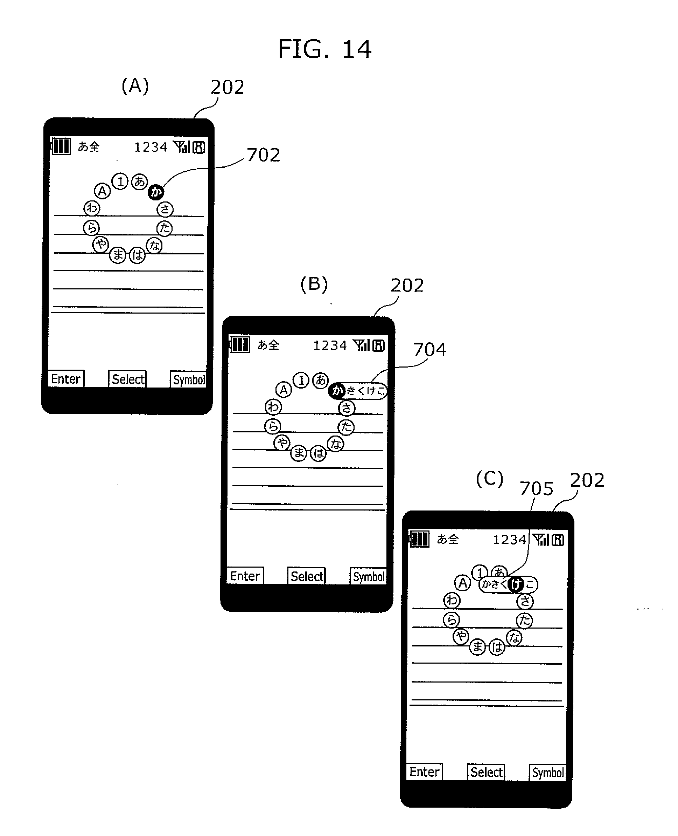

FIGS. 13 exemplify other operations of the rotor 214. FIGS. 14 exemplify screens displayed on the liquid crystal displaying unit 202 in the operations shown in FIGS. 13. Using FIGS. 13 and 14, operations for selecting a hiragana character 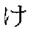 ""_{,} that is one of units of information in the second information group, shall be described in detail, hereinafter.

When the user touches with his or her finger a contact position 701 on the pressing part 206A as shown in FIG. 13 (A), the row characters "...# 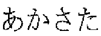 ..." are displayed on the liquid crystal displaying unit 202 as shown in FIG. 14 (A). Here, when the user presses down (tilts) the pressing part 206A with the information selecting unit 425 selecting " 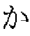 " (with the image generating unit 431 highlighting " 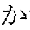 ", the third terminal 220, as well as the first terminal 210 and the second terminal 211, becomes conductive, and the information determining unit 426 determines the selection of " 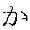 " row. As a result, the image generating unit 431 generates an image of " 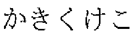 ". Then, as shown in a reference number 704 in FIG. 14 (B), column characters " 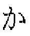 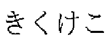 " are displayed on the liquid crystal displaying unit 202. At this moment, " 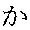 " out of the column characters " 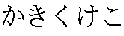 " is highlighted by the image generating unit 431.

Next, as shown in FIG. 13 (B), when the user rotates the rotor 214 90 degrees clockwise, the rotation amount detecting unit 428 detects a rotation amount "3". Then, as shown in a reference number 705 in FIG. 14 (C), column characters are highlighted in the order of " 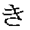 ", " 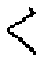 ", and " 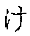 " as the rotation amount increases. Here, when the user leaves his or her finger from the pressing part 206Awith the image generating unit 431 highlighting " 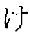 ", the first through the third terminals become non-conductive to determine the selection of " 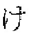 ". It is noted that when selecting column characters, the rotation amount detecting unit 428 is structured not to detect the rotation direction of the rotor 214, as shown in FIG. (8). Thus when the user rotates the rotor 214 90 degrees counter-clockwise, the rotation amount detecting unit detects the rotation amount "3"; meanwhile, when the user rotates the rotor 214 counter-clockwise, the rotation amount detecting unit 428 may also detect the rotation amount as "-" value. In this case, for example, the information selecting unit 425 is structured to select the column characters: in an ascending order as the rotation amount increases when the rotation amount is "+"; and in an descending order as the rotation amount decreases when the rotation amount is "-".

As described above, the image generating unit 431 intends to arrange the unit of information included in the second information group in line, and generates an image of which the unit of information selected by the information selecting unit 425 is highlighted more than another unit of information. This enables the user to easily see the set of selected unit information out of the units of information included in the second information group.

As described above, the input device 203 in the first embodiment allows an information inputting position to be stationary with respect to the device body. In other words, each unit of information in the first information group is rigidly assigned to an associated section. Hence when the user presses the pressing part, the unit of information corresponding to the section is always selected. Thus, a problem, an information inputting position with respect to the device body changes, does not occur.

Further, the input device 203 in the first embodiment can select a desired unit of information out of the first information group and determine the selection with simple rotation operations even though the operator presses a wrong button. In the conventional art, when the user presses a wrong button, the user needs to press the clear key to resume the state before. On the contrary, with the input device 203 in the first embodiment, the user can switches the selection from a unit of information corresponding to a once-specified section to another unit of information, by rotating the rotor 214. In other words, when the user touches the rotor 214, the user makes a temporal selection of a unit of information corresponding to the position. Then, the user presses down the rotor 214 with the rotor 214 rotated and the desired unit of information temporarily selected, and makes an actual selection of the unit of information. This enables the user to select the desired unit of information without leaving a finger touching the rotor 214. In addition, a selection process between the temporary selection and the actual selection is displayed on the liquid crystal displaying unit 202. Hence, the user may watch only the liquid crystal displaying unit 202, and does not need to watch an operating unit. When the user consecutively enters plural characters, the highlighting in the does not disappear unless the user leaves the finger from the rotor 214. Thus, the user can efficiently enter the plural characters with the help of the highlighting.

### (Second Embodiment)

In the first embodiment, a structure is described in that the rotation direction of the rotor 214 is not detected for selecting column characters. In the second embodiment, a structure is described in that the rotation direction of the rotor 214 is detected for selecting column characters.

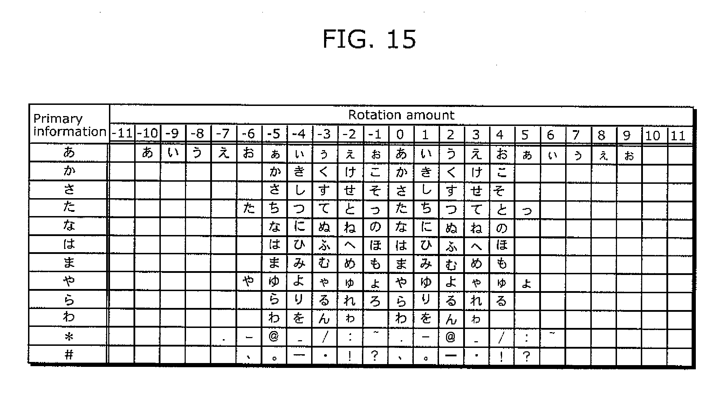

FIG. 15 is a diagram conceptually illustrating a second information group in the second embodiment. FIG. 15 corresponds to FIG. 8 (B) in the first embodiment. The second embodiment is the same as the first embodiment in that the second information group is associated with primary information. Meanwhile, the second embodiment is different from the first embodiment in that the second embodiment adopts a structure to reflect the rotation direction of the rotor 214. The unit information sets included in the second information group are arranged inversely depending on the rotation direction. For a forward direction in which the rotation amount increases by 1, the " 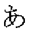 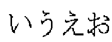 " sequence is adopted, and for a backward direction in which the rotation amount decreases by -1, the " 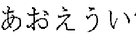 " sequence is adopted, for example. It is noted that a first information group in the second embodiment is the same as the first information group in the

### first embodiment.

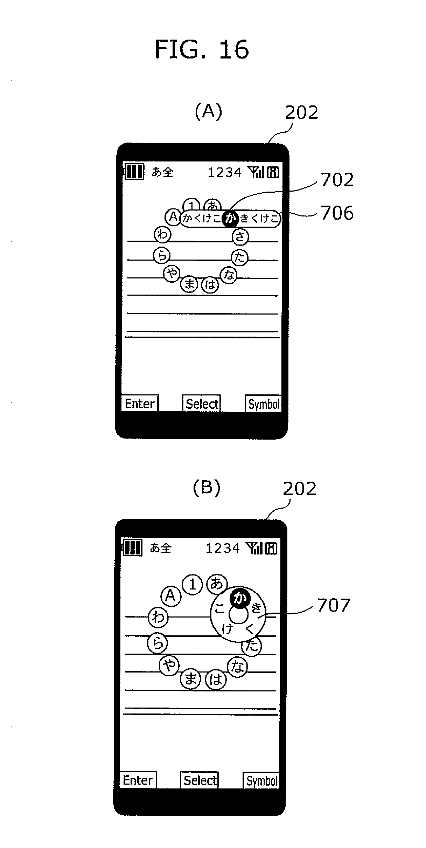

FIGS. 16 show screen examples displayed on the liquid crystal displaying unit 202 in the second embodiment. In the first embodiment, column characters " 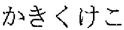 " are displayed on the liquid crystal displaying unit 202 as shown in FIG. 14 (B). Meanwhile, in the second embodiment, column characters " 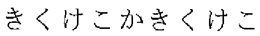 " are displayed on the liquid crystal displaying unit 202 as shown in a numerical reference 706 of the FIG. 16 (A). This enables a desired column character to be efficiently selected. Immediately after " 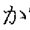 " row is determined, for example, 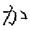 "" is in selection out of the column characters included in " 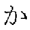 " row.

For selecting " 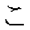 " in this state, according to the first embodiment, the user needs to rotate the rotor 214 120 degrees clockwise or counter-clockwise. The second embodiment, meanwhile, requires only a rotation of the rotor 214 30 degrees counter-clockwise. As a matter of course, for selecting " 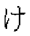 ", as well as selecting " 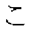 ", a small rotation amount of the rotor 214 is required less in the second embodiment.

Moreover, as shown in a numerical reference 707 in FIG. 16 (B), column characters may be arranged in circle. Here, the image generating unit 431 intends to generate an image with a unit of information, included in the second group information, arranged in circle. The above case is the same as the case in FIG. 16 (A) in that the user can select the column characters in the order of: " 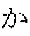 ", " 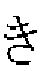 ", " 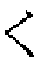 ", " 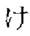 ", and " 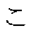 " when rotating the rotor 214 clockwise; and " 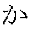 ", " 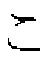 ", " 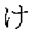 ", " 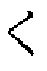 ", and " 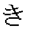 " when rotating the rotor 214 counter-clockwise.

As described above, the input device 203 in the second embodiment can efficiently select a desired column character in addition to achieving the effects in the first embodiment since the input device 203 adopts a structure to reflect the rotation amount of the rotor 214 for selecting column characters, as well.

### (Third Embodiment)

In the first and second embodiments, a rotor in circle is exemplified; meanwhile, this rotor may be divided into some parts. In a third embodiment, a rotor divided into some parts is described. Hereinafter, the third embodiment shall be described, focusing on differences from the first embodiment.

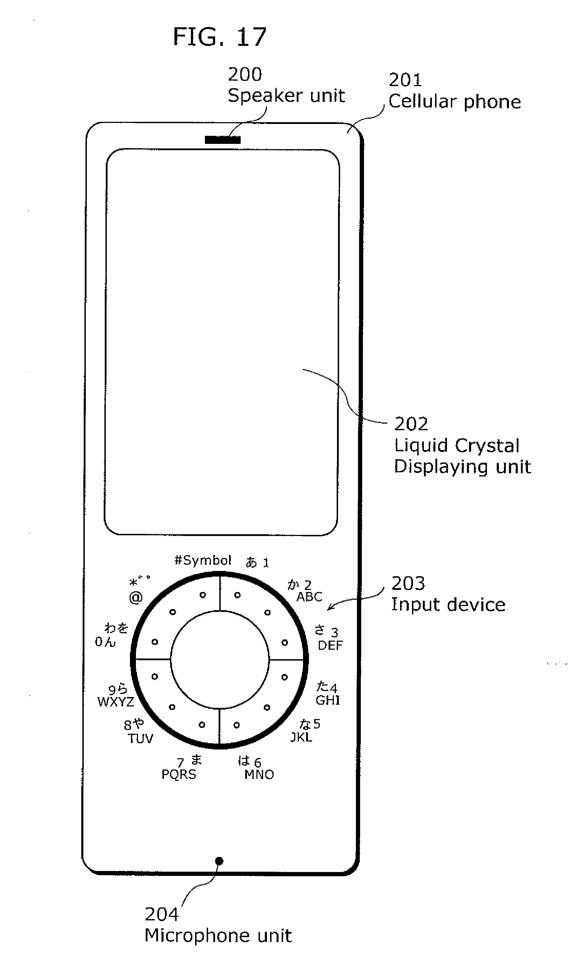

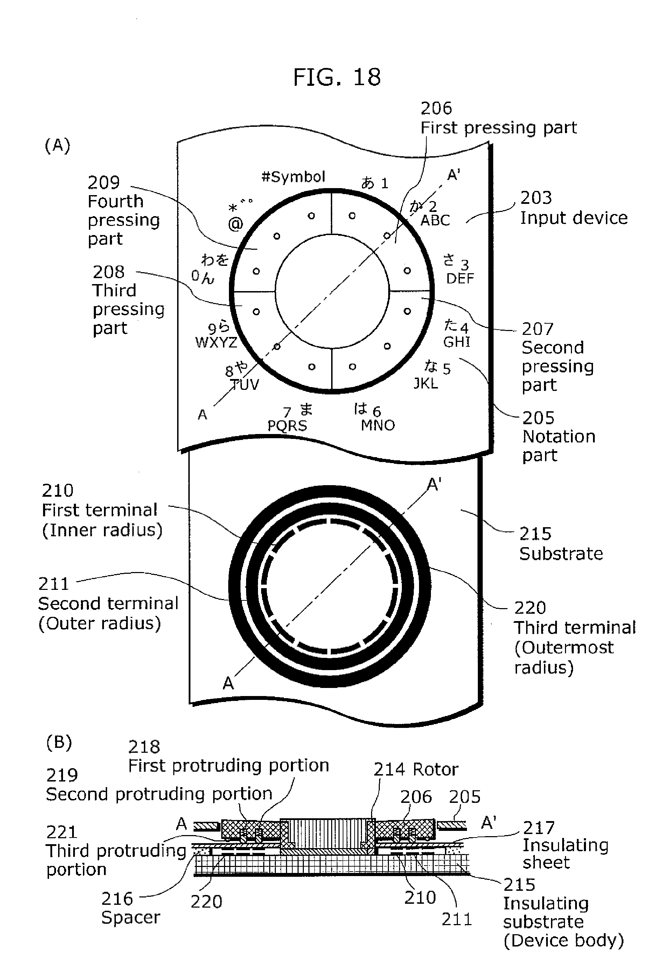

FIG. 17 is the elevation view of the cellular phone 201 applying the input device 203 in the first embodiment. FIG. 18 illustrates an internal structure of the input device 203. FIG. 18 (A) is an elevation view of the indicating part 205 on a surface of a casing, and an elevation view of the substrate 215 in the indicating part 205. FIG. 18 (B) is a cross-sectional view taken from A - A' of FIG. 18 (A).

As shown in the drawings, the input device 203 includes: the indicating part 205; a first pressing part 206; a second pressing part 207; a third pressing part 208; a fourth pressing part 209; the first terminal 210; the second terminal 211; the third terminal 220; the rotor 214; the substrate 215; the spacer 216; the insulating sheet 217; the first protruding portion (the first contact) 218; the second protruding portion 219; and the third protruding portion 221. The first pressing part 206, the second pressing part 207, the third pressing part 208, and the fourth pressing part may collectively be referred to as a "pressing part", hereinafter.

When the user presses the pressing part attached to the rotor 214, the only pressing part on which the user presses is intended to hold down toward substrate 215. Here, when the user adjusts the center of the first pressing part 206 to an indicating part 205 indicated 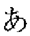 " and presses the center, a first terminal 210 corresponding to the pressed position becomes conductive. The "center of the first pressing part 206" is a position corresponding to the middle circle out of three circles indicated on the first pressing part 206. The three circles are indicated on surfaces of other pressing parts, as well as on the surface of the first pressing part 206.

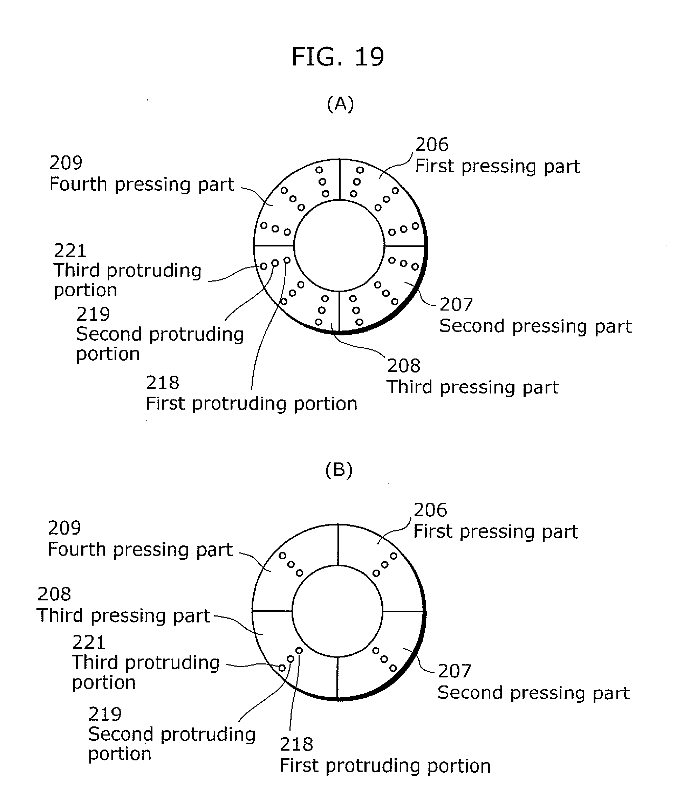

Each of the first protruding portion 218, the second protruding portion 219, and the third protruding portion 221 may be provided, in number, either: as many as the first terminals 210 (12 pieces), shown in FIG. 19 (A); or as many as the pressing parts (four pieces) shown in FIG. 19 (B). In the case where as many protruding portions as the first terminals 210 are provided, as shown in the FIG. 19 (A), three first terminals 210 (0) to (2) become simultaneously conductive, for example. In this case, out of terminal numbers "0" to "2" in the three first terminals 210 (0) to (2), only a terminal number "1" in the middle first terminal 210 (1) is supposed to be adopted. The above-described scheme to adopt only the middle terminal number is not limited in particular. Preferably, the scheme may be achieved with software processing.

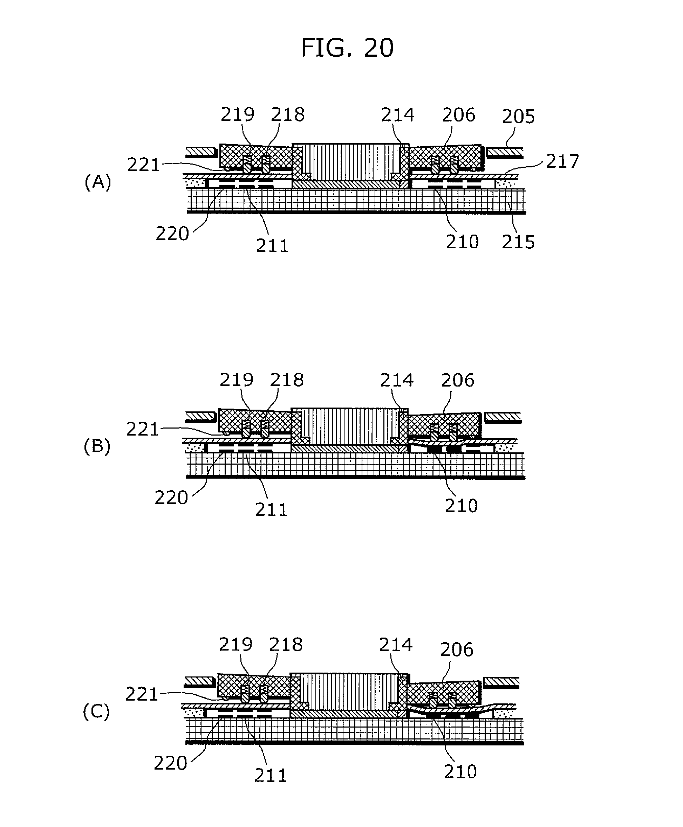

FIGS. 20 are cross-sectional views taken from line A - A' of FIG. 18 (A). FIG. 20 (A) shows a state of the first pressing part 206 before pressed. FIG. 20 (B) shows a state of the first pressing part on which the user touches with his or her. FIG. 20 (C) shows a state of the first pressing part 206 pressed further by the user. Hereinafter, a process is described in that pressing the first pressing part 206 causes the first to the third protruding portions to respectively abut the first to the third terminals.

As shown in FIG. 20 (A), a distance between the third protruding portion 221 and the third terminal 220 is greater than a distance between the first protruding portion 218 and the first terminal 210. Here, the third protruding portion 221 is provided to the first protruding portion 206. The first protruding portion 218 and the second protruding portion 219 are provided to the first pressing part 206 with a predetermined clearance in order to be held down in a direction to which the first pressing unit 206 is pressed. Further, a diaphragm is interposed in the clearance as an elastic member. A pressing force to deform the diaphragm is greater than a sum of a pressing force needed to hold down the pressing part and a pressing force needed to cause the first terminal 210 and the second terminal 211 to be conductive. As shown in FIG. 20 (B), this can provide enough clearances between the first pressing part 206 and the first protruding portion 210 and between the first pressing part 206 and the second protruding portion 211 when the first pressing part 206 is held down and the first and the second terminals 210 and 211 become conductive. In addition, each clearance is set to be greater than a sum of: a clearance which the third terminal 220 has; and a clearance between the third protruding portion 221 and the insulating sheet 217. As a result, when the first pressing part 206 is pressed further with the first protruding portion 218 abutted to the first terminal 210 and the second protruding portion 219 abutted to the second terminal 211 as shown in FIG. 20 (B), the third protruding portion can also be abutted to the third terminal as shown in FIG. 20 (C).

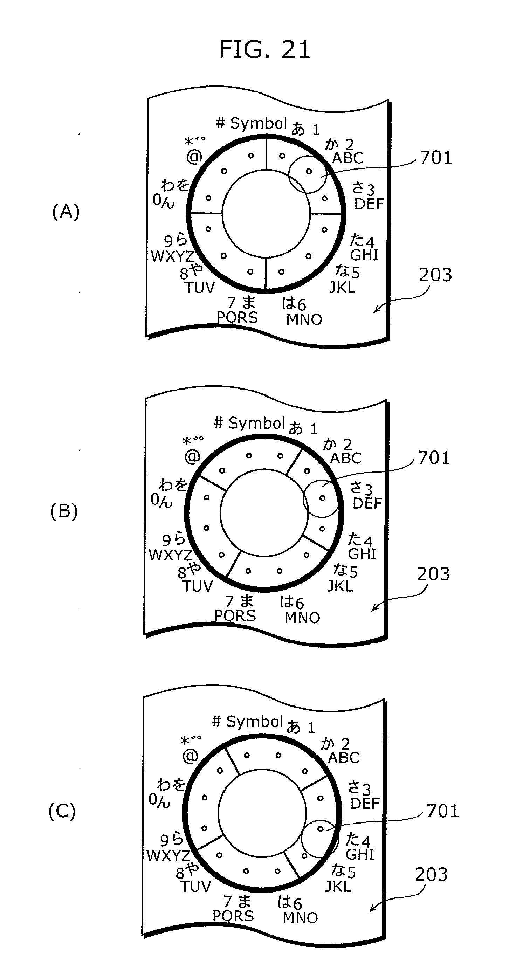

FIGS. 21 exemplify operations of the rotor 214. 701 in FIGS. 21 locates where on the rotor 214 the user touches with his or her finger. Using FIGS. 21 and 12, operations for selecting row characters in the order of " 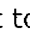 ", " 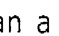 ", and " 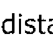 ", as a unit of information in the first information group, shall be described in detail, hereinafter.

As shown in FIG. 21 (A), when the user touches with his or her finger the center position 701 of the first pressing part 206, the first pressing part 206 is held down, and the first and the second terminal 210 and 211 become conductive. Since a conductive first terminal 210 is the first terminal 210 (1), and the rotor 214 has not rotated yet, " 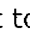 " is selected out of the first information group as a row character corresponding to a rotation amount "0" with a terminal number "1". As a result, the image generating unit 431 generates an image of "...# 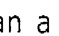 > 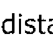 ...", and , as shown in FIG. 12 (A), row characters in the first information group "...# 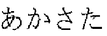 ..." are displayed on the liquid crystal displaying unit 202. At this moment, the image generating unit 431 highlights " 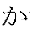 " row, selected by the user, out of the row characters "...# 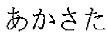 ....".

Next, as shown in FIG. 21 (B), when the user rotates the rotor 214 30 degrees clockwise, the rotation amount detecting unit 428 detects a rotation amount "1". Then, as shown in FIG. 12 (B), in response to the rotation amount "1", the information selecting unit 425 selects " 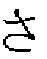 " row, and the image generating unit 431 highlights the " 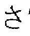 " row. As shown in FIG. 21 (C), when the user rotates the rotor 214 another 30 degrees clockwise, the rotation amount detecting unit 428 detects a rotation amount "2". Then, in response to the rotation amount "2", the information selecting unit 425 selects " 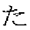 " row, and the image generating unit 431 highlights the " 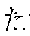 " row as shown in FIG. 12 (C).

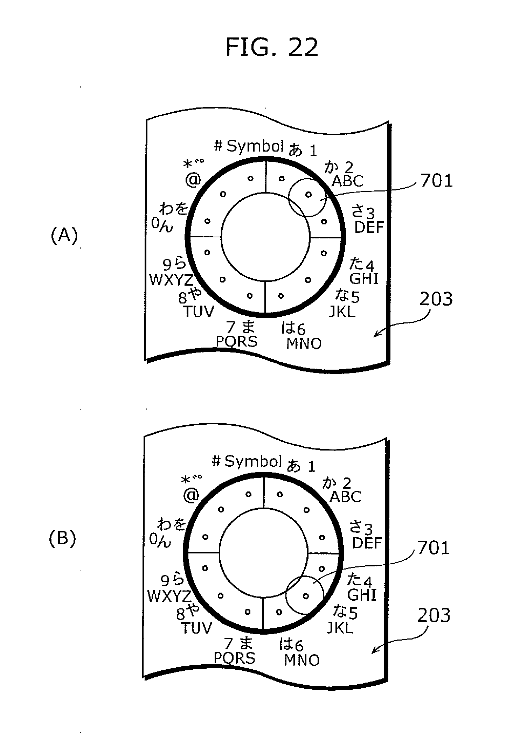

FIGS. 22 exemplify other operations of the rotor 214. Using FIGS. 22 and 14, operations for selecting a hiragana character " 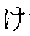 "_{,} which is one of units of information in the second information group, shall be described in detail, hereinafter.

When the user touches with his or her finger any position on the first pressing part 206 as shown in FIG. 22 (A), the row characters "...# 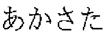 ..." are displayed on the liquid crystal displaying unit 202 as shown in FIG. 14 (A). Here, when the user presses down the first pressing part 206 with the information selecting unit 425 selecting " 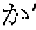 " (with the image generating unit 431 highlighting " 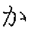 " the third terminal 220, as well as the first terminal 210 and the second terminal 211, becomes conductive. Hence, the information determining unit 426 determines the selection of " 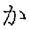 " row. As a result, the image generating unit 431 generates an image of " 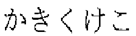 ". Then, as shown in the reference number 704 in FIG. 14 (B), column characters " 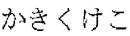 " are displayed on the liquid crystal displaying unit 202. At this moment " 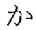 " out of the column characters " 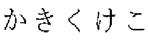 " is highlighted.

Next, as shown in FIG. 22 (B), when the user rotates the rotor 214 90 degrees clockwise, the rotation amount detecting unit 428 detects a rotation amount "3". Then, as shown in the reference number 705 in FIG. 14 (C), the image generating unit 431 highlights the column characters " 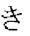 ", "<", and " 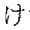 " in the ascending order in response to the increase in the rotation amount. Here, when the user releases his or her finger from the first pressing part 206 with the image generating unit 431 highlighting " 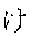 ", the first through the third terminals become non-conductive to determine the selection of " 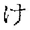 ". It is noted that when selecting column characters, as shown in FIG. 8 (B), the rotor 214 adopts a structure to ignore a rotation direction of the rotor 214. Thus when the user rotates the rotor 214 90 degrees counter-clockwise, the rotation amount detecting unit detects the rotation amount "3"; meanwhile, when the user rotates the rotor 214 counter-clockwise, the rotation amount detecting unit 428 may also detect the rotation amount as "-" value. In this case, for example, the information selecting unit 425 is structured to select the column characters: in an ascending order as the rotation amount increases when the rotation amount is "+"; and in a descending order as the rotation amount decreases when the rotation amount is "-".

As described above, the third and the first embodiment can achieve similar effects even though the embodiments are different in that the rotor 214 is divided or not.

It is noted that in the third embodiment, the rotor 214 is divided into four pressing parts; meanwhile the number which the rotor 214 divided into is not limited in particular as far as the rotor 214 is divided into equal to or less than the number of the first terminals 210.

In the first to third embodiments, a structure is exemplified in that the pressing part is held down in two stages; meanwhile, the present invention shall not be limited to this. The present invention can also be structured to have a pressing part to be held down just one stage. In other words, the present invention may adopt a pressing part which is structured to: (1) temporarily select an information character with a first pressing; (2) select a desired information group with a rotation of the rotor 214; (3) determine the information group with a second pressing; (4) selects a desired set of unit information out of the determined information group with a rotation of the rotor 214; and (5) determine the unit of information with a third pressing, as a structural element. Here, the pressing detecting unit 440 detects the fact that the rotor 214 is re-pressed. When the pressing detecting unit 440 detects the fact that the rotor 214 is re-pressed, the rotation amount determining unit 427 intends to determine a unit of information which the information selecting unit 425 has selected. The "re-pressing" referred here includes the second and the third pressings. As described above, regarding the "first pressing" as a selection of an information group (selecting a predetermined unit of information out of an information group; that is a group of units of information each of which is associated with a corresponding section), the present invention can achieve, with just an extra pressing, similar effects to the first to the third embodiments achieve.

The image generating unit 431 intends to generate images such as an information group and a unit of information; meanwhile, the image generating unit 431 may also generate images with an information group or a unit of information deleted, as a matter of course. For example, when the user relaxes pressing to resume the state in which the user's finger touches on the pressing part with the character " 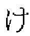 " selected out of the unit of information " 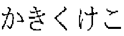 " as shown in FIG. 14 (C), the image displaying the unit of information " 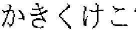 " is deleted, and only an image of the information group " 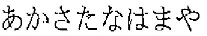 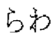 A1", arranged in circle, remains.

Further, another technique, which has not described above, to detect the above state of pressing is to process the pressing by software; that is, when the pressing is released, a predetermined delay interval (1 to 2 seconds) is provided to the state of pressing. Thus, the pressing detecting unit 440 recognizes the end of the delay interval as "pressing released"; on the contrary, when the pressing detecting unit 440 recognizes the case where the delay interval has not ended (the pressing is released before the delay interval), the pressing detecting unit 440 causes the pressing to be continued. In other words, a timing unit is included to detect whether or not a predetermined delay interval has been elapsed, beginning at a time of an actual pressing released. Then, in the case where the timing unit detects the end of the delay interval, the pressing detecting unit 440 detects the pressing release. On the contrary, when the timing unit detects the fact that the delay interval has not ended, the pressing detecting unit 440 causes the pressing to be continued. As described above, in the structure including a delay interval, leaving a finger more or less from the rotor 214 is not regarded as pressing release, so that the user can enter, with a touch of a finger, desired information at ease, causing no misoperations.

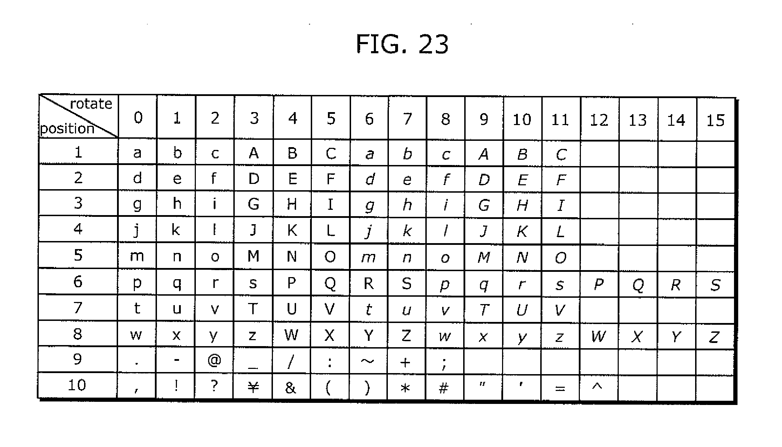

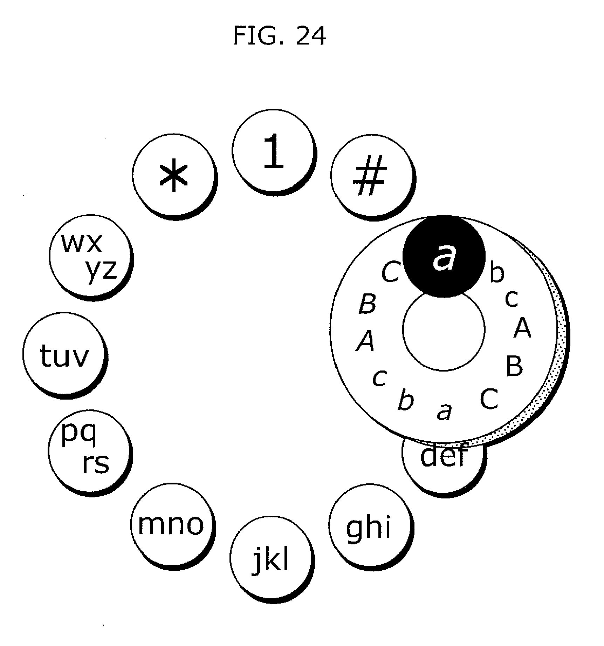

Further, the first to third embodiments are described in a Japanese language input mode; meanwhile, the Japanese language input mode can be switched to an English language mode as described above. FIG. 23 conceptually illustrates an information group held in the information group holding unit 424. Switching to the English language mode causes the information group shown in FIG. 23 to be used. Position in FIG. 23 denotes an identification number to identify a first terminal 210 which the rotor 214 causes to become conductive. Rotate in FIG. 23 corresponds to a number of which a pulse provided from an encoder is counted. In the English language mode, the liquid crystal displaying unit 202 displays the alphabet as shown in FIG. 24. This exemplifies the case where the user touches, with his or her finger, a position corresponding to a position "1". Here, the information selecting unit 425 selects "a", corresponding to position "1", out of "abcABC...", and the image generating unit 431 highlights "a". Then, when the user rotates the rotor 214, the highlight moves in response to the rotation amount, and when the user presses the rotor 214 further down, an alphabet letter highlighted at the moment is determined as input information.

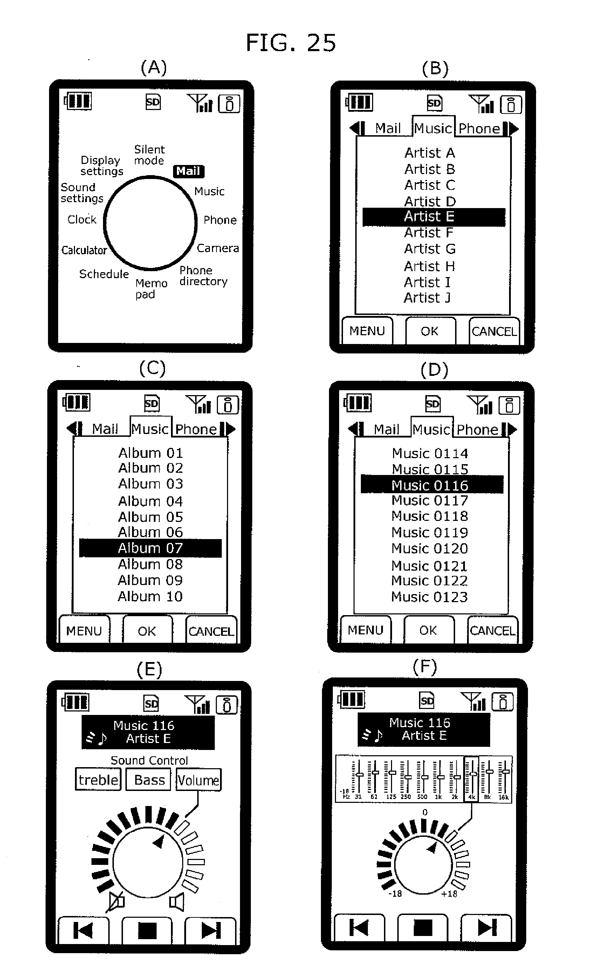

In addition, the first to third embodiments are described in entering the Japanese language; meanwhile, the input device in the present invention can reproduce a song, as well. FIG. 25 illustrates screen transition displayed by the liquid crystal displaying unit 202. As shown in FIG. 25 (A), first, when the user touches with his or her finger the rotor 214, menus such as "Mail", "Music", and "Phone" are displayed on the liquid crystal displaying unit 202 as a unit of information in the first information group. Here, when the user rotates the rotor 214 to cause the information selecting unit 425 to select "Music" and then presses down the rotor 214, the information selecting unit 425 transits from a hierarchy to a hierarchy for selecting a predetermined artist; namely, a unit of information, in the second information group, associated with "Music", as shown in FIG. 25 (B). When a predetermined artist E is selected in the hierarchy for selecting a predetermined artist, the information selecting unit 425 transits the hierarchy for selecting a predetermined artist to a hierarchy for selecting a predetermined album; namely a unit of information, in the third information group, associated with the artist E, as shown in FIG. 25 (C). When a predetermined album 07 is selected in the hierarchy for selecting a predetermined artist, the information selecting unit 425 transits the hierarchy for selecting a predetermined artist to a hierarchy for selecting a song; namely a unit of information, in the fourth information group, associated with the album 07, as shown in FIG. 25 (D). When a predetermined song 0116 is selected in the hierarchy for selecting a song, the predetermined song 0116 is reproduced as shown in FIG. 25 (E). Sound volume of the song 0116 can be changed by rotating the rotor 214 during the reproduction.

Instead of a sound volume screen in FIG. 25 (E), a graphic equalizer screen in FIG. 25 (F) may also be adopted. A graphic equalizer is a circuit to be able to divide a sound into several frequency bands, and to change sound volume for each of the frequency bands. FIG. 25 (F) shows that a sound is divided into 10 frequency bands, and a frequency band in 4 kHz is changed in sound volume. Here, the unit of information included in the first information group is band information indicating a frequency band, and the unit of information included in the second information group is sound volume information indicating sound volume. This allows the user to make a temporal selection of a frequency band in accordance with a position of the rotor 214 which the user touches. When the user presses down the rotor 214, with the rotor 214 rotated, and then a desired frequency band temporarily selected, the user can make an actual selection of the frequency band. Rotating the rotor 214 in the state, the user can change sound volume of the actually selected frequency band. During that time, a selection process of the information is displayed on the liquid crystal displaying unit 202, and thus the user may watch only the liquid crystal displaying unit 202. Hence, the user can change sound volume of a song with simple operations.

### Industrial Applicability

The present invention can be applied to an input device, such as a portable personal computer, a cellular phone, a remote controller for an electronics device, and a portable audio-visual device: which enables a user to input desired information by simple operations even though the user has pressed a wrong button; as well as to make an information inputting position stationary with respect to the device body.

## Claims

1. An input device comprising:
a device body;
a rotor provided on said device body;
a section specifying unit configured to specify a section out of sections into which an annular area on said device body is divided in a rotation direction, the annular area being provided along said rotor;
a rotation amount detecting unit configured to detect a rotation amount of said rotor from the section specified by said section specifying unit;
a section corresponding information holding unit which holds correspondence relationship between each of the sections on said device body and a unit of information corresponding to each of the sections;
an information group holding unit which holds, as a first information group, each of units of information associated with the corresponding section on said device body;
an information specifying unit configured to specify a unit of information corresponding to the section specified by said section specifying unit based on the correspondence relationship between the section and the unit of information, the relationship being held in said section corresponding information holding unit; and
an information selecting unit configured to select, out of the first information group held in said information group holding unit, a predetermined unit of information with respect to the unit of information as a reference point according to the rotation amount, the unit of information being specified by said information specifying unit, and the rotation amount being detected by said amount detecting unit.

2. The input device according to Claim 1, further comprising:
a rotation amount determining unit configured to determine the rotation amount detected by said rotation amount detecting unit; and
an information determining unit configured to determine the predetermined unit of information selected by said information selecting unit, based on the rotation amount determined by said rotation amount determining unit.

3. The input device according to Claim 2, further comprising
a pressing detecting unit configured to detect that said rotor is pressed,
wherein said section specifying unit is configured to specify the section through the detection of the pressing of said rotor by said pressing detecting unit, and
said rotation amount determining unit is configured to determine the rotation amount by said pressing detecting unit detecting that said pressed rotor has been released.

4. The input device according to Claim 2, further comprising a pressing detecting unit configured to detect that said rotor is pressed,
wherein said section specifying unit is configured to specify the section by said pressing detecting unit detecting that said rotor has been pressed, and
said rotation amount determining unit is configured to determine the rotation amount by said pressing detecting unit detecting that said rotor has been re-pressed.

5. The input device according to Claim 2, further comprising a pressing detecting unit configured to detect that said rotor is pressed,
wherein said section specifying unit is configured to specify the section by said pressing detecting unit detecting that said rotor has been pressed, and
said rotation amount determining unit is configured to determine the rotation amount by said pressing detecting unit detecting that said rotor has been pressed until said rotor has been further held down.

6. The input device according to Claim 2,
wherein said information group holding unit holds a second information group associated with the predetermined unit of information in the first information group, and
said information selecting unit is configured to select a predetermined unit of information out of the second information group associated with the predetermined unit of information when said information determining unit determines the predetermined unit of information in the first information group.

7. The input device according to Claim 6, further comprising:
a first pressing detecting unit configured to detect that said rotor is pressed; and
a second pressing detecting unit configured to detect that said rotor is pressed to hold down further than said first pressing detecting unit detects,
wherein said information selecting unit is configured to select: the predetermined unit of information out of the first information group while said first pressing detecting unit alone detects that said rotor is pressed; and the predetermined unit information out of the second information group while said second pressing detecting unit detects that said rotor is pressed.

8. The input device according to Claim 6, further comprising an image generating unit configured to generate an image in which: the units of information included in the first information group are arranged in a circle; units of information included in the second information group are arranged in a line; and a unit of information selected by said information selecting unit is highlighted more than the other units of information.

9. The input device according to Claim 6, further comprising an image generating unit configured to generate an image in which the unit of information included in the first information group is arranged in a circle, a unit of information included in the second information group is arranged in a circle, and a set of information selected by said information selecting unit is displayed more prominently than the other units of information.

10. The input device according to Claim 6,
wherein the second information group includes either character information having a row of hiragana characters or sound volume information indicating sound volume.

11. The input device according to Claim 1, further comprising
a pressing detecting unit configured to detect that said rotor is pressed,
wherein said section specifying unit is configured to specify, based on a signal from said pressing detecting unit, the section pressed via said rotor out of the annular area.

12. The input device according to Claim 11,
wherein said pressing detecting unit includes:
first terminals each of which is assigned to the associated section; and
first contacts each of which abuts any of said first terminals, so that said first terminal is selected.

13. The input device according to Claim 12,
wherein said first terminals are provided underneath said rotor.

14. The input device according to Claim 12,
wherein as many said first contacts as said first terminals are provided.

15. The input device according to Claim 12
wherein each of the units of information included in the first information group is either marked or stamped around said rotor in association with a position on which corresponding said first terminal is provided.

16. The input device according to Claim 1, further comprising
an image generating unit configured to generate an image in which the unit of information included in the first information group is arranged in a circle, and the unit of information selected by said information selecting unit is highlighted more than the other units of information.

17. The input device according to Claim 1,
wherein the first information group includes either character information having a column of hiragana characters or band information indicating a frequency band.

18. An input method for an input device including a device body and a rotor provided on said device body, said method comprising:
specifying a section out of sections into which an annular area on said device body is divided in a rotation direction;
detecting a rotation amount of the rotor from the section specified in said specifying the section;
specifying a unit of information corresponding to the section specified in said specifying the section based on correspondence relationship between the section and the unit of information corresponding to the section; and
selecting, out of a first information group including units of information each of which is corresponding to an associating section on the device body, a predetermined unit of information with respect to the unit of information as a reference point according to the rotation amount, the unit of information being specified in said specifying the set of information, and the rotation amount being detected in said detecting the rotation amount.

19. An input program for an input device including a device body and a rotor provided on the device body, said input program causing a computer to execute:
specifying a section out of sections into which an annular area on said device body is divided in a rotation direction;
detecting a rotation amount of the rotor from the section specified in said specifying the section;
specifying a unit of information corresponding to the section specified in said specifying the section based on correspondence relationship between the section and the unit of information corresponding to the section; and
selecting, out of a first information group including units of information each of which is corresponding to an associating section on the device body, a predetermined unit of information with respect to the unit of information as a reference point according to the rotation amount, the unit of information being specified in said specifying the set of information, and the rotation amount being detected in said detecting the rotation amount.
